# EUROPEAN PATENT APPLICATION

(11) **EP 2 624 486 A1**
(43) Date of publication of application: **07.08.2013**
(21) Application number: 12153467.1
(22) Date of filing: 01.02.2012
(51) Int. Cl.: H04J 3/06

(54) **A client communication device, a server communication device, and clock synchronization method therein**

(71) Applicant: Sony Ericsson Mobile Communications AB, 221 88 Lund (SE)
(72) Inventor: Hellman, Erik, 217 44 Malmö (SE); Petef, Andrej, 224 74 Lund (SE)
(74) Representative: Valea AB

(57) **Abstract**

A client communication device 104, a server communication device 102 and methods therein for clock synchronization of the client communication device to the server communication device. The server communication device and the client communication device are communicatively connectable via a communications network 101. The client communication device comprises a calculating circuit 403 configured to calculate a client command timestamp, *ClientCommandTimestamp,* for a command communicated by the server device as *ClientCommandTimestamp = ServerCommandTimestamp -* (*FirstClientTimestamp - FirstServerTimestamp*) *-* (*RoundTripTime*/*2*)*.* Further, the communication device comprises a synchronizing circuit 404 configured to synchronize to the internal clock of the server device by means of the calculated client command timestamp, *ClientCommandTimestamp.*

## Description

### TECHNICAL FIELD

Embodiments herein relate to a client communication device, a server communication device, and methods therein. Especially, embodiments relate to clock synchronization.

### BACKGROUND

When several communication devices, such as mobile terminals, wireless terminals, mobile stations, mobile telephones, cellular telephones, laptops, stationary Personal Computers (PCs), gaming consoles or media centres, just to mention some further examples, comprised in a communications system, want to perform an operation synchronized they need to make sure that they have a common timestamp to work from.

By the term timestamp when used herein is meant a time value with a predetermined precision, e.g., given in seconds, milliseconds or nanoseconds, that defines a time for when to start a certain operation.

For instance, if a plurality of communication devices wish to play a music track simultaneously they need to communicate between each other the exact timestamp for when to start the playback of the music track.

However, a drawback with communicating an exact timestamp between the plurality of communication devices that want to perform an action simultaneously is that the internal clock of the communication devices might not be exactly synchronized causing the action not to be performed simultaneously.

Another drawback is that one of the plurality of communication devices may have an internal clock set according to a different time-zone which will cause that communication device not to perform the action simultaneously with the action performed by the other communication devices.

### SUMMARY

An object of embodiments herein is to provide a way of improving the performance in a communications system.

According to a first aspect of embodiments herein, the object is achieved by a method in a client communication device for clock synchronization with a server communication device. The server communication device and the client communication device are communicatively connectable via a communications network.

The client communication device calculates a client command timestamp, *ClientCommandTimestamp,* for a command communicated by the server communication device as *ClientCommandTimestamp = ServerCommandTimestamp - (FirstClientTimestamp - FirstServerTimestamp) - (RoundTripTimel2).*

The *ServerCommandTimestamp* is a server command timestamp corresponding to the server internal clock value for the command communicated by the server communication device. The *FirstServerTimestamp* is a first server timestamp corresponding to a current server internal clock value relating to a first request. The *FirstClientTimestamp* is a first client timestamp corresponding to current client internal clock value relating to the first request. The *RoundTripTime* is a roundtrip time value corresponding to the difference between a second server timestamp and the first server timestamp, wherein the second server time stamp value is a current server internal clock value relating to a second request.

Further, the client communication device synchronizes to the internal clock of the server communication device by means of the calculated client command timestamp, *ClientCommandTimestamp.*

According to a second aspect of embodiments herein, the object is achieved by a client communication device for clock synchronization with a server communication device. The server communication device and the client communication device are communicatively connectable via a communications network.

The client communication device comprises a calculating circuit configured to calculate a client command timestamp, *ClientCommandTimestamp,* for a command communicated by the server communication device as *ClientCommandTimestamp* = *ServerCommandTimestamp - (FirstClientTimestamp - FirstServerTimestamp*) *-* (*RoundTripTime*/*2*)*,* wherein the *ServerCommandTimestamp* is a server command timestamp corresponding to the server internal clock value for a command communicated by the server communication device, wherein the *FirstServerTimestamp* is a first server timestamp corresponding to a current server internal clock value relating to a first request, wherein the *FirstClientTimestamp* is a first client timestamp corresponding to current client internal clock value relating to the first request, and wherein the *RoundTripTime* is a roundtrip time value corresponding to the difference between a second server timestamp and the first server timestamp, wherein the second server time stamp value is a current server internal clock value relating to a second request.

Further, the client communication device comprises a synchronizing circuit configured to synchronize to the internal clock of the server communication device by means of the calculated client command timestamp, *ClientCommandTimestamp.*

According to a third aspect of embodiments herein, the object is achieved by a method in a server communication device for supporting clock synchronization with at least one client communication device. The server communication device and the at least one client communication device are communicatively connectable via a communications network.

The server communication device receives a first request requesting a first server timestamp, *FirstServerTimestamp,* from the client communication device, and sends the first server timestamp, *FirstServerTimestamp,* to the client communication device in response to the first request. The first server timestamp is a current server internal clock value relating to the first request.

Further, the server communication device receives a second request requesting a roundtrip time value, *RoundTripTime,* for a network message from the client communication device.

The server communication device calculates the roundtrip time value, *RoundTripTime,* as the difference between a second server timestamp and the first server timestamp. The second server time stamp value is a current server internal clock value relating to the second request.

The total roundtrip time value, *RoundTripTime,* is sent by the server communication device to the client communication device in response to the second request.

According to a fourth aspect of embodiments herein, the object is achieved by a server communication device for supporting clock synchronization with at least one client communication device. The server communication device and the at least one client communication device are communicatively connectable via a communications network.

The server communication device comprises a receiving circuit configured to receive a first request requesting a first server timestamp, *FirstServerTimestamp,* from the client communication device.

The server communication device comprises further a sending circuit configured to send the first server timestamp, *FirstServerTimestamp,* to the client communication device in response to the first request. The first server timestamp is a current server internal clock value relating to the first request.

The receiving circuit is further configured to receive a second request requesting a roundtrip time value, *RoundTripTime,* for a network message from the client communication device.

Further, the server communication device comprises a calculating circuit configured to calculate the roundtrip time value, *RoundTripTime,* as the difference between a second server timestamp and the first server timestamp. The second server time stamp value is a current server internal clock value relating to the second request.

The sending circuit is further configured to send the total roundtrip time value, *RoundTripTime,* to the client communication device in response to the second request.

Since the client communication device calculates a client command timestamp, *ClientCommandTimestamp,* for a command communicated by the server communication device and synchronizes to the internal clock of the server communication device by means of the calculated client command timestamp, *ClientCommandTimestamp,* the client communication device is able to perform an action in response to the server command at a desired time point simultaneously with the action being performed by one or more other client communication devices that are synchronized to the internal clock of the server communication device. This results in an improved performance in the communications system by allowing a plurality of client communication devices to perform actions simultaneously in response to a command from the server communication device.

An advantage of embodiments herein is that embodiments provide for synchronized music and video playback and real-time gaming.

A further advantage of embodiments herein is that embodiments provide synchronization for taking photos from multiple cameras or handling communication latency in networks for pop quiz games.

### BRIEF DESCRIPTION OF THE DRAWINGS

Examples of embodiments herein are described in more detail with reference to attached drawings in which:
Figure 1 is a schematic block diagram illustrating embodiments of a communications system;
Figure 2 is a flowchart depicting embodiments of a method in a communications system;
Figure 3 is a flowchart depicting embodiments of a method in a client communication device;
Figure 4 is a schematic block diagram illustrating embodiments of a client communication device;
Figure 5 is a flowchart depicting embodiments of a method in a server communication device; and
Figure 6 is a schematic block diagram illustrating embodiments of a server communication device.

### DETAILED DESCRIPTION

Embodiments herein will be exemplified in the following non-limiting description.

In order to clock synchronize a plurality of communication devices comprised in a communications system, one of the communication devices may act as a server communication device to all the other devices. The all other devices may act as clients towards the server communication device and may therefore be referred to as client communication devices.

According to one example, each client communication device sends a request for a current server timestamp to the server communication device, which immediately responds with the value from its internal clock.

Each client communication device may calculate the difference from the server's current timestamp and its own current timestamp. The client communication device may then send a request back to the server communication device to request the total roundtrip time for a network message. The server communication device may read the timestamp for the first request and subtract that timestamp from a current timestamp from its internal clock. The result is the roundtrip time for a request/response between the client communication device and the server communication device. The result is then sent back as a response to the client communication device. The client communication device may calculate the client command timestamp for the client's internal clock for an operation communicated by the server communication device with regards to network latency and differences in the internal clocks between the two communication devices. This operation may be repeated as often as necessary to ensure that the communications devices are kept synchronized.

When the server communication device sends a command, e.g., a playback music track command together with the timestamp for the command to be performed, each client communication device uses the calculated value to determine the client command timestamp for its own internal clock.

As each client communication device may perform the time synchronization described above, the server communication device may need to send only one command to all client communication devices. The command comprises a timestamp based on the server communication device's internal clock. Thus, the server communication device may not need to keep track of the internal clock of each client communication device.

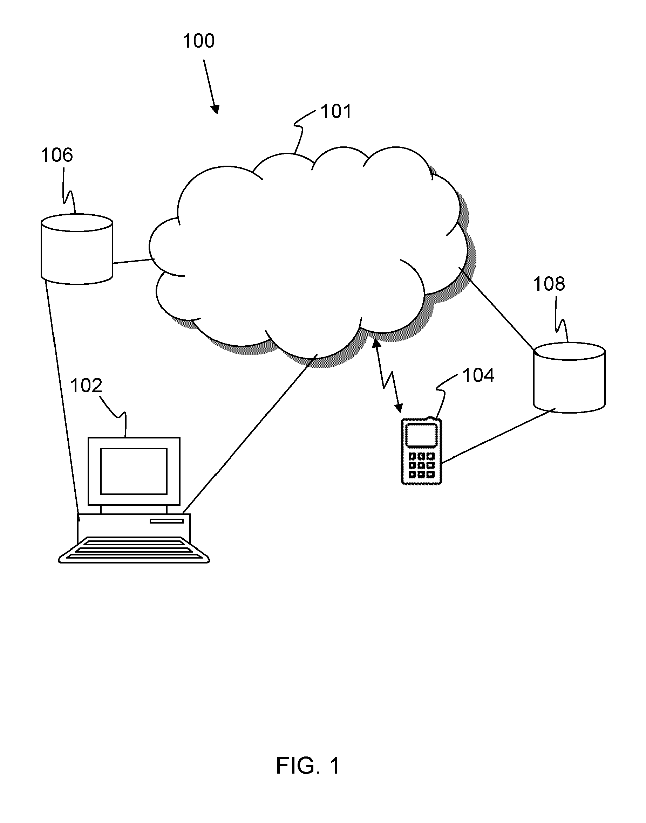

**Figure 1** is a schematic overview of embodiments of **a communications system 100.** The communications system 100 comprises **a communications network 101** over which **a server communication device 102** is communicatively connected to **at least one client communication device 104.**

In some embodiments, the server communication device 102 is communicatively connected to a plurality of client communication devices 104 being members of e.g. a music group session which will be described below.

The communications network 101 may comprise a radio communications network, the Internet, a Local Area Network (LAN), a Wide Area Network (WAN), a Personal Area Network (PAN), etc.

The server communication device 102 and the client communication device 104 may be mobile terminals, wireless terminals and/or mobile stations, mobile telephones, cellular telephones, laptops, stationary PCs, gaming consoles or media centres, just to mention some examples. The server communication device 102 and the client communication device 104 in the present context may be, for example, portable, pocket-storable, hand-held, computer-comprised, or vehicle-mounted mobile devices, enabled to communicate voice and/or data, via the communication network 101.

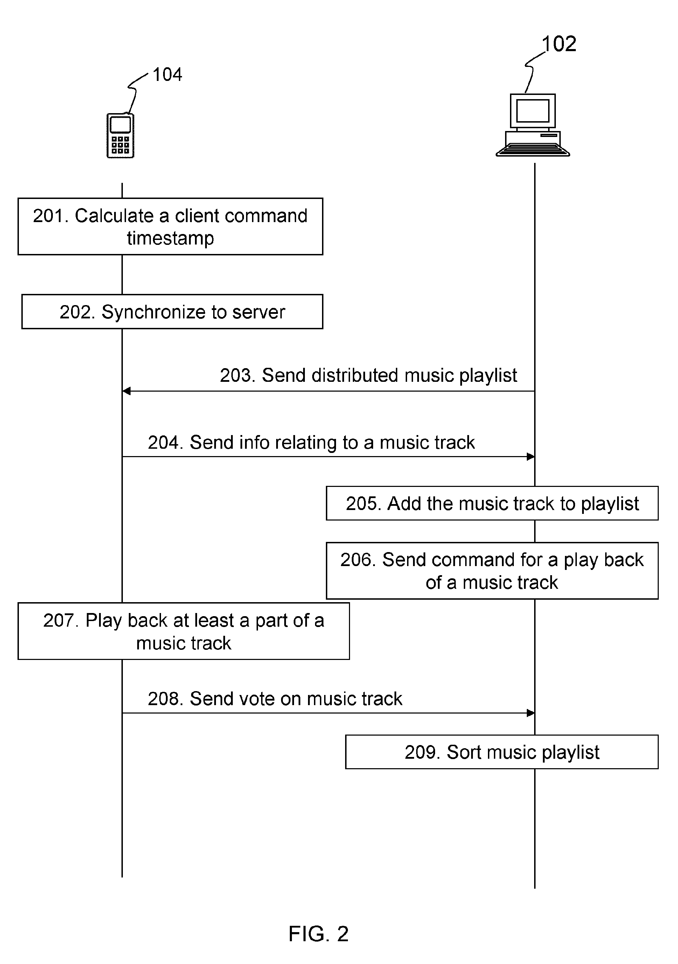

**Figure 2** **is a flowchart depicting embodiments of a method** in communication system 100 for clock synchronization of at least one client communication device 104 with the server communication device 102.

Actions for clock synchronization of the at least one client communication device 104 with the server communication device 102 will now be described in more detail. The actions do not have to be performed in the order stated below, but may be taken in any suitable order. Further, actions may be combined.

### Action 201

The at least one client communication device 104 calculates a client command timestamp, *ClientCommandTimestamp,* for a command communicated by the server communication device 102 to the client communication device 104. The client command timestamp is calculated as

### ClientCommandTimestamp = ServerCommandTimestamp - (FirstClientTimestamp - FirstServerTimestamp) - (RoundTripTime/2)

The *ServerCommandTimestamp* is a server command timestamp corresponding to the server internal clock value for the command communicated by the server communication device 102.

The *FirstServerTimestamp* is a first server timestamp corresponding to a current server internal clock value relating to a first request.

The *FirstClientTimestamp* is a first client timestamp corresponding to current client internal clock value relating to the first request.

The *RoundTripTime* is a roundtrip time value corresponding to the difference between a second server timestamp and the first server timestamp, wherein the second server time stamp value is a current server internal clock value relating to a second request.

### Action 202

The at least one client communication device 104 synchronizes to the internal clock of the server communication device 102 by means of the calculated client command timestamp, *ClientCommandTimestamp.*

This means that one or more client communication devices 104 that have performed actions 201 and 202, by means of their respective calculated client command timestamp may be able to perform an action in response to the received server command at the same time, i.e. synchronized, irrespective of their respective internal clock value. This will be described in more detail below, for example in relation to action 203-209, wherein an application of synchronized music playback will be described.

Other possible applications may be synchronized video playback, real-time gaming, positioning calculation, e.g. calculation of a position based on radio signals, or synchronization of a distributed database.

### Action 203

In some embodiments, the server communication device 102 sends a distributed music playlist to the client communication device 104. The distributed music playlist comprises one or more music tracks added by one or more members of a music group session. The one or more members of the music group session are one or more client communication devices 104.

### Action 204

In some embodiments, the client communication device 104 sends information relating to a music track to be added to the distributed music playlist shared by the one or more members of the music group session.

The client communication device 104 may send information relating to the music track from a local storage comprised in the client communications device 104 or from the external storage 108 connected to the client communications device 104.

### Action 205

In some embodiments, the server communication device 102 adds the music track to the distributed music playlist shared by the one or more members of the music group session.

### Action 206

In some embodiments, the server communication device 102 sends a command for a playback of a music track comprised in the distributed playlist to the client communication device 104.

### Action 207

In some embodiments, the client communication device 104 plays back at least a part of the music track using the calculated client command timestamp. Since the members of the music group session is one or more client communication devices 104 that have performed synchronization with the server communication device 102 as described in relation to actions 201 and 202 above, the playback for each client communication device 104 will be clock synchronized with all other members of the music group session.

### Action 208

In some embodiments, the client communication device 104 sends a vote on a music track comprised in the distributed music playlist. In such embodiments, the client communication device 104 further receives a synchronized distributed music playlist comprising information relating to one or more added music tracks from members of the music group session, wherein the synchronized distributed music playlist is sorted based on the number of votes each music track has received.

### Action 209

In some embodiments, the server communication device 102 sorts the distributed music playlist based on received votes. The sorted distributed music playlist may be sent to all client communication devices 104 being members of a music group session.

Thus, according to one example, a number of users, by means of a number of communication devices, may use the music track playback application to connect to each other over the communications network 101 to form a music group session. The music group session may be defined by the shared distributed playlist of music tracks. Each client communication device 104 being a member to the music group session may add one or more music tracks to the shared distributed playlist which then gets synchronized to all the other client communication devices 104 that are members. One of the communication devices may be assigned a role as a disc jockey (DJ), i.e. the server communication device 102, and may control the playback of music tracks at the client communication devices 104. Once a playback of a music track is completed it is removed from the shared distributed playlist by the server communication device 102.

Further, each member may only add a specific number of music tracks at the same time, e.g., at most three tracks. In some embodiments, a new music track may not be added by the member until a previously added music track by the same member has been played and removed from the shared distributed playlist.

Furthermore, each music track in the shared distributed playlist may also receive a vote, e.g., "Like", from the members. In some embodiments, a member may only vote on one music track once, but any music track, including the members own tracks, may be voted on. The distributed playlist may be automatically sorted based on the number of votes each music track has received.

Competitiveness of the music track playback application may come when members add music tracks to the shared distributed playlist that are popular by the other members. Since their music tracks will be played earlier, they also get to add new music tracks before other members. The member with the least popular music tracks may end up with the risk of not getting a chance to add more music tracks at all if other members add more popular music tracks.

Further, in the music track playback application, rewards may be given to a member by letting the member with most voted music tracks to be assigned the DJ role, e.g. to act as the server communication device 102. When another member receives more votes the DJ role may be transferred to that member.

Since the music group session may be formed over the communication network 101, members don't need to be located in close vicinity to each other but may connect to each other over the communication network 101.

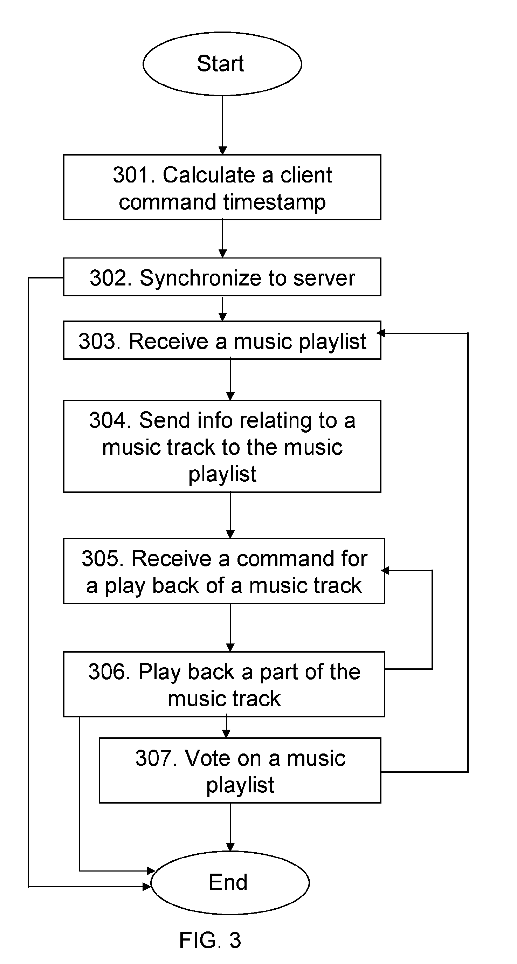

**Figure 3** **is a flowchart depicting embodiments of a method** client communication device 104.

Actions for clock synchronization of the client communication device 104 with the server communication device 102 will now be described in more detail. The actions do not have to be performed in the order stated below, but may be taken in any suitable order. Further, actions may be combined.

### Action 301

As previously mentioned in action 201, the client communication device 104 calculates the client command timestamp, *ClientCommandTimestamp,* for a command communicated by the server communication device 102 to the client communication device 104. The client command timestamp is calculated as

### ClientCommandTimestamp = ServerCommandTimestamp - (FirstClientTimestamp - FirstServerTimestamp) - (RoundTripTime/2)

As previously described, the *ServerCommandTimestamp* is a server command timestamp corresponding to the server internal clock value for the command communicated by the server communication device 102. The *FirstServerTimestamp* is a first server timestamp corresponding to a current server internal clock value relating to a first request. The *FirstClientTimestamp* is a first client timestamp corresponding to current client internal clock value relating to the first request. The *RoundTripTime* is a roundtrip time value corresponding to the difference between a second server timestamp and the first server timestamp, wherein the second server time stamp value is a current server internal clock value relating to a second request.

In some embodiments, the server communication device 104 calculates the roundtrip value. In such embodiments, the action 301 further comprises that the client communication device 104 sends the first request requesting a first server timestamp, *FirstServerTimestamp,* to the server communication device 102.

Further, the client communication device 104 may receive the first server timestamp, *FirstServerTimestamp,* from the server communication device 102. The first server timestamp, *FirstServerTimestamp,* is the current server internal clock value for the first request.

The client communication device 104 may send the second request requesting the roundtrip time value for a network message to the server communication device 102. The client communication device 104 may receive the roundtrip time value, *RoundTripTime,* from the server communication device 102.

However, in some other embodiments, e.g. when the server communication device 102 wants to synchronize to a specific client communication device 104, the client communication device 104 calculates the roundtrip value. In such embodiments, the action 301 further comprise that the client communication device 104 receives the first request requesting a first response from the client communication device 104 and comprising the first server timestamp, *FirstServerTimestamp,* from the server communication device 102.

Further, the client communication device 104 may send the first response to the server communication device 102, and may receive the second request comprising the second server timestamp from the server communication device 102.

Furthermore, the client communication device 104 may calculate the roundtrip time value, *RoundTripTime,* as the difference between the second server timestamp and the first server timestamp.

Thus it should be understood that the client communication device 104 may receive the roundtrip time value from the server communication device 102 or the client communication device 104 may calculate the roundtrip time value.

### Action 302

As previously mentioned in action 202, the client communication device 104 synchronizes to the internal clock of the server communication device 102 by means of the calculated client command timestamp, *ClientCommandTimestamp.* Further, as previously mentioned, when a plurality of client communication devices 104 synchronize to the internal clock of the server communication device 102 as described, the server communication device 102 may send only one command to the plurality of client communication devices 104 which will be able to perform an action at the same time in response to the command by means of their respective calculated client command timestamp irrespective of the value of their respective internal clock. This will be described in more detail below, for example in relation to action 303-307, wherein the application of synchronized music playback will be described.

### Action 303

In some embodiments, the client communication device 104 receives a distributed music playlist from the server communication device 102. The distributed music playlist comprises one or more music tracks added by one or more client communication devices 104 being members of a music group session.

### Action 304

In some embodiments, the client communication device 104 sends information relating to a music track to be added to the distributed music playlist shared by the one or more client communication devices 104 which are members of the music group session.

The client communication device 104 may send information relating to the music track from a local storage, such as a memory, comprised in the client communications device 104 or from the external storage 108 connected to the client communications device 104.

### Action 305

In some embodiments, the client communication device 104 receives a command for a playback of a music track in the distributed playlist from the server communication device 102.

### Action 306

In some embodiments, the client communication device 104 plays back at least a part of the music track using the calculated client command timestamp, whereby the playback will be clock synchronized for all client communication devices 104 being members of the music group session.

### Action 307

In some embodiments, the client communication device 104 sends a vote on a music track comprised in the distributed music playlist. In such embodiments, the client communication device 104 further receives a synchronized distributed music playlist comprising information relating to one or more added music tracks from members of the music group session, wherein the synchronized distributed music playlist is sorted based on the number of votes each music track has received.

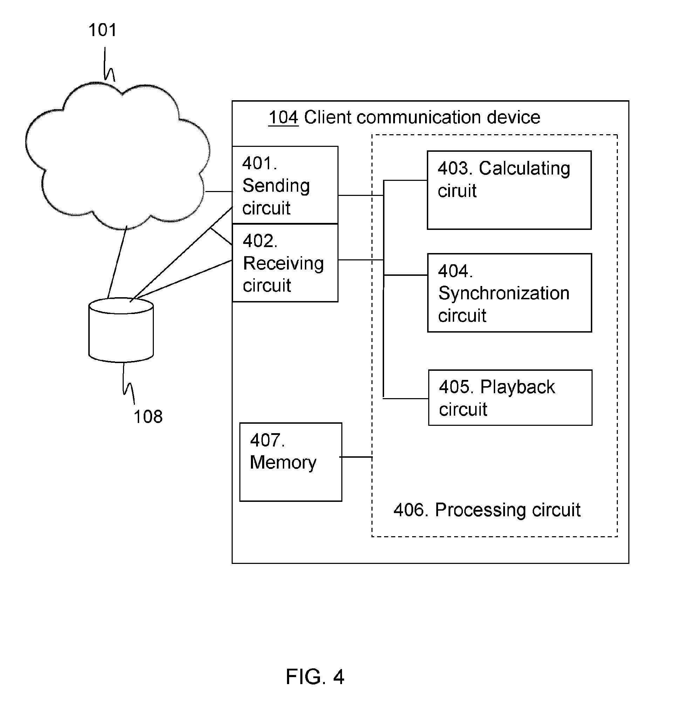

To perform the method actions in the client communication device 104 for clock synchronization of the client communication device 104 with the server communication device 102 as described above, some embodiments of the client communication device 104 comprise the arrangement depicted in **Figure 4**. As mentioned above, the client communication device 104 is comprised in the communications system 100.

The client communication device 104 comprises further **a sending circuit 401** and **a receiving circuit 402.**

In some embodiments, the sending unit 401 is configured to send information relating to a music track to be added to the distributed music playlist shared by the one or more client communication devices 104 being members of the music group session.

The sending circuit 401 may further be configured to send a vote on a music track comprised in the distributed music playlist to the server communication device 102.

Furthermore, the sending circuit 401 may be configured to send information relating to the music track from a local storage, such as a memory, comprised in the client communications device 104 or from an external storage 108 connected to the client communications device 104.

In some embodiments, the receiving circuit 402 is configured to receive, from the server communication device 102, a distributed music playlist comprising one or more music tracks added by one or more members of a music group session.

The receiving circuit 402 may further be configured to receive a command for an action to be performed. For example, the receiving circuit 402 may be configured to receive a command for a playback of a music track comprised in the distributed playlist from the server communication device 102.

In some embodiments, the receiving circuit 402 is configured to receive a synchronized distributed music playlist comprising information relating to one or more added music tracks from the plurality of client communication device 104 being members of the music group session. The synchronized distributed music playlist may be sorted based on the number of votes each music track has received.

The client communication device 104 comprises a calculating circuit 403 configured to calculate the client command timestamp, *ClientCommandTimestamp,* for a command communicated by the server communication device 102. The calculating circuit 403 is configured to calculate the client command timestamp as

### ClientCommandTimestamp = ServerCommandTimestamp - (FirstClientTimestamp - FirstServerTimestamp) - (RoundTripTime/2),

As previously mentioned, the *ServerCommandTimestamp* is a server command timestamp corresponding to the server internal clock value for the command communicated by the server communication device 102. The *FirstServerTimestamp* is a first server timestamp corresponding to a current server internal clock value relating to a first request. The *FirstClientTimestamp* is a first client timestamp corresponding to current client internal clock value relating to the first request. The *RoundTripTime* is a roundtrip time value corresponding to the difference between a second server timestamp and the first server timestamp, wherein the second server time stamp value is a current server internal clock value relating to a second request.

In some embodiments, the server communication device 102 is configured to calculate the roundtrip value. In such embodiments, the calculating circuit 403 further is configured to, by means of the sending circuit 401, send the first request requesting a first server timestamp, *FirstServerTimestamp,* to the server communication device 102.

Further, the calculating circuit 403 further is configured to, by means of the receiving circuit 402, receive the first server timestamp, *FirstServerTimestamp,* from the server communication device 102. The first server timestamp, *FirstServerTimestamp,* is the current server internal clock value for the first request.

Furthermore, by means of the sending circuit 401, the calculating circuit 403 is further configured to send the second request requesting the roundtrip time value for a network message to the server communication device 102.

By means of the receiving circuit 402, the calculating circuit 403 may be configured to receive the roundtrip time value, *RoundTripTime,* from the server communication device 102.

However, in some other embodiments, e.g. when the server communication device 102 wants to synchronize to a specific client communication device 104, the client communication device 104 is configured to calculate the roundtrip value. In such embodiments, the calculating circuit 403 is further configured to, by means of the receiving circuit 402, receive the first request requesting a first response from the client communication device and comprising the first server timestamp, *FirstServerTimestamp,* from the server communication device 102.

By means of the sending circuit 401, the calculating circuit 403 is configured to send the first response to the server communication device 102.

Further, by means of the receiving circuit 402, the calculating circuit 403 is further configured to receive the second request comprising the second server timestamp from the server communication device 102.

Furthermore, the calculating circuit 403 is configured to calculate the roundtrip time value, *RoundTripTime,* as the difference between the second server timestamp and the first server timestamp.

Further, the client communication device 104 comprises **a synchronizing circuit 404** configured to synchronize to the internal clock of the server communication device 102 by means of the calculated client command timestamp, *ClientCommandTimestamp.*

The client communication device 104 may further comprise **a playback circuit 405** configured to play back at least a part of the music track in response to a play back command from the server communication device 102. The playback circuit 405 is configured to use the calculated client command timestamp when playing back at least a part of the music track, whereby the playback is clock synchronized for all client communication devices 104 being members of the music group session.

Further, embodiments herein for clock synchronization of the client communication device 104 with the server communication device 102 may be implemented through one or more processors, e.g. microprocessor, such as **a processing circuit 406** comprised in the client communication device 104 depicted in Figure 4, together with computer program code for performing the functions and/or method actions of embodiments herein.

The client communication device 104 may further comprise **a memory 407.** The memory 407 may comprise one or more memory units and may be used to store for example data and/or information such as data and/or information relating to timestamps such as server timestamps, client timestamps, calculated client command timestamps, and/or to calculated roundtrip values, and/or to music tracks and/or music playlists and/or to members of the music group session.

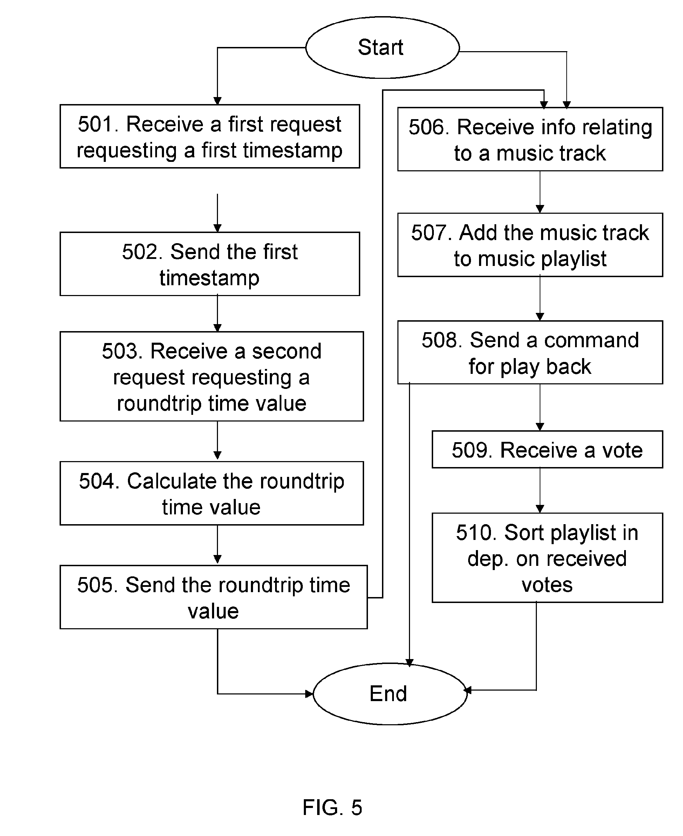

**Figure 5** **is a flowchart depicting embodiments of a method** server communication device 102.

Actions for supporting clock synchronization of the client communication device 104 with the server communication device 102 will now be described in more detail. The actions do not have to be performed in the order stated below, but may be taken in any suitable order. Further, actions may be combined.

### Action 501

The server communication device 102 receives a first request requesting a first server timestamp, *FirstServerTimestamp,* from the client communication device 104.

### Action 502

The server communication device 102 send the first server timestamp, *FirstServerTimestamp,* to the client communication device 104 in response to the first request. The first server timestamp is a current server internal clock value relating to the first request. In this scenario, this means that the first server timestamp is the internal clock value of the server communication device 102 at the time point when the server communication device 102 receives the first request.

### Action 503

The server communication device 102 receives a second request requesting a roundtrip time value, *RoundTripTime,* for a network message from the client communication device 104.

### Action 504

The server communication device 102 calculates the roundtrip time value, *RoundTripTime,* as the difference between a second server timestamp and the first server timestamp. The second server time stamp value is a current server internal clock value relating to the second request. In this scenario, this means that the second server timestamp is the internal clock value of the server communication device 102 at the time point when the server communication device 102 receives the second request.

### Action 505

The server communication device 102 sends the total roundtrip time value, *RoundTripTime,* to the client communication device 104 in response to the second request.

### Action 506

In some embodiments, the server communication device 102 receives information relating to a music track from the at least one client communication device 104. The at least one client communication device 104 is a member of a music group session.

### Action 507

The server communication device 102 may add the music track to a distributed music playlist shared by one or more client communication devices 104 being members to the music group session.

In some embodiments, the server communication device 102 adds the music track to the distributed music play list in dependence of the number of votes the client communication device 104 have received on one or more previously added music tracks.

The server communication device 102 may add the music track to the distributed music play list only when a music track previously added by the same client communication device 104 has been played back and removed from the distributed music play list.

### Action 508

The server communication device 102 may send a command for a play back of a music track in the distributed music playlist to all client communication devices 104 being members of the music group session.

### Action 509

The server communication device 102 may receive a vote on a music track comprised in the distributed music playlist from the at least one client communication devices 104.

### Action 510

In some embodiments, the server communication device 102 sorts the distributed music playlist based on the number of votes each music track has received.

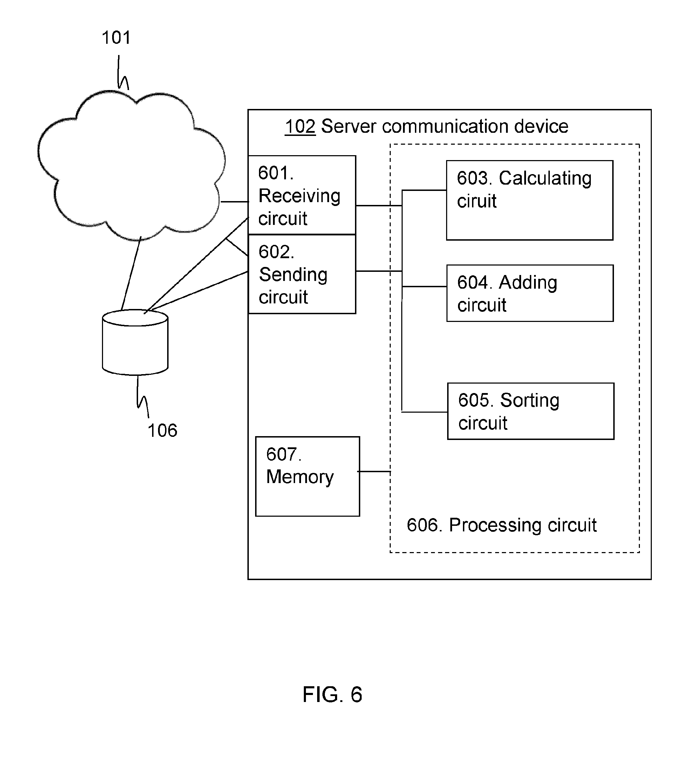

To perform the method actions in the server communication device 102 for supporting clock synchronization of the client communication device 104 with the server communication device 102 as described above, some embodiments of the server communication device 102 comprise the arrangement depicted in **Figure 6**. As mentioned above, the server communication device 102 is comprised in the communications system 100.

The server communication device 102 comprises **a receiving circuit 601** configured to receive a first request requesting a first server timestamp, *FirstServerTimestamp,* from the client communication device 104.

The receiving circuit 601 is further configured to receive a second request requesting a roundtrip time value, *RoundTripTime,* for a network message from the client communication device 104. A network message is a message sent from e.g. the client communication device 104 to the server communication device 102, or vice versa, over the communications network 101. The message may comprise a command for execution of an operation or information relating to one or more communication devices 102,104 or to the communications network 101, or to one or more devices comprised in or connected to the communications system 100.

In some embodiments, the receiving circuit 601 is configured to receive information relating to a music track from the at least one client communication device 104, wherein the at least one client communication device 104 is a member of a music group session.

The receiving circuit 601 may further be configured to receive a vote on a music track comprised in the distributed music playlist from the at least one client communication devices 104.

The server communication device 102 comprises further **a sending circuit 602** configured to send the first server timestamp, *FirstServerTimestamp,* to the client communication device 104 in response to the first request. The first server timestamp is a current server internal clock value relating to the first request.

The sending circuit 602 is further configured to send the total roundtrip time value, *RoundTripTime,* to the client communication device 104 in response to the second request.

In some embodiments, the sending circuit 602 is further configured to send a command for a play back of a music track in the distributed music playlist to all client communication devices 104 being members of the music group session.

Further, the server communication device 102 comprises **a calculating circuit 603** configured to calculate the roundtrip time value, *RoundTripTime,* as the difference between a second server timestamp and the first server timestamp. The second server time stamp value is a current server internal clock value relating to the second request.

In some embodiments, the server communication device 102 further comprises **an adding circuit 604** configured to add the music track to a distributed music playlist shared by the at least one client communication device 104.

The adding circuit 604 may further be configured to add the music track to the distributed music play list in dependence of the number of votes the client communication device 104 have received on one or more previously added music tracks.

In some embodiments, the adding circuit 604 is configured to add the music track to the distributed music play list only when a music track previously added by the same client communication device 104 have been played back and removed from the distributed music play list.

Further, the server communication device 102 may comprise **a sorting circuit 605** configured to sort the distributed music playlist based on the number of votes each music track has received.

Further, embodiments herein for supporting clock synchronization of the client communication device 104 with the server communication device 102 may be implemented through one or more processors, e.g. microprocessor, such as **a processing circuit 606** comprised in the server communication device 102 depicted in Figure 6, together with computer program code for performing the functions and/or method actions of embodiments herein.

The server communication device 102 may further comprise **a memory 607**. The memory 607 may comprise one or more memory units and may be used to store for example data and/or information such as data and/or information relating to timestamps such as server timestamps, client timestamps, calculated client command timestamps, and/or to calculated roundtrip values, and/or to music tracks and/or music playlists and/or to one or more client communication devices 104 being members of the music group session.

Although the description above contains many specifics, they should not be construed as limiting but as merely providing illustrations of some presently preferred embodiments. The technology fully encompasses other embodiments which may become apparent to those skilled in the art. Reference to an element in the singular is not intended to mean "one and only one" unless explicitly so stated, but rather "one or more." All structural and functional equivalents to the elements of the above-described embodiments that are known to those of ordinary skill in the art are expressly incorporated herein by reference and are intended to be encompassed hereby. Moreover, it is not necessary for a device or method to address each and every problem sought to be solved by the described technology for it to be encompassed hereby.

When using the word "comprise" or "comprising" it shall be interpreted as non-limiting, in the meaning of "consist at least of".

When using the word action/actions it shall be interpreted broadly and not to imply that the actions have to be carried out in the order mentioned. Instead, the actions may be carried out in any suitable order other than the order mentioned. Further, some action/actions may be optional.

The embodiments herein are not limited to the above described examples. Various alternatives, modifications and equivalents may be used. Therefore, the above examples should not be taken as limiting the scope of the invention, which is defined by the appending claims.

## Claims

1. A method in a client communication device (104) for clock synchronization with a server communication device (102), wherein the server communication device (102) and the client communication device (104) are communicatively connectable via a communications network (101), and wherein the method comprises:
- *calculating (201,301)* a client command timestamp, *ClientCommandTimestamp,* for a command communicated by the server communication device (102) as *ClientCommandTimestamp = ServerCommandTimestamp -* (*FirstClientTimestamp - FirstServerTimestamp*) *-* (*RoundTripTime*/*2*)*,*
wherein the *ServerCommandTimestamp* is a server command timestamp corresponding to the server internal clock value for the command communicated by the server communication device (102),
wherein the *FirstServerTimestamp* is a first server timestamp corresponding to a current server internal clock value relating to a first request,
wherein the *FirstClientTimestamp* is a first client timestamp corresponding to current client internal clock value relating to the first request, and
wherein the *RoundTripTime* is a roundtrip time value corresponding to the difference between a second server timestamp and the first server timestamp, wherein the second server time stamp value is a current server internal clock value relating to a second request; and
- *synchronizing (202,302)* to the internal clock of the server communication device (102) by means of the calculated client command timestamp, *ClientCommandTimestamp.*

2. The method of claim 1, wherein the calculating (301) further comprises:
- sending, to the server communication device (102), the first request requesting a first server timestamp, *FirstServerTimestamp;*
- receiving, from the server communication device (102), the first server timestamp, *FirstServerTimestamp,* wherein the first server timestamp, *FirstServerTimestamp,* is the current server internal clock value for the first request;
- sending, to the server communication device (102), the second request requesting the roundtrip time value for a network message; and
- receiving, from the server communication device (102), the roundtrip time value, *RoundTripTime.*

3. The method of claim 1, wherein calculating (301) further comprises:
- receiving, from the server communication device (102), the first request requesting a first response from the client communication device (104) and comprising the first server timestamp, *FirstServerTimestamp;*
- sending, to the server communication device (102), the first response;
- receiving, from the server communication device (102), the second request comprising the second server timestamp; and
- calculating the roundtrip time value, *RoundTripTime,* as the difference between the second server timestamp and the first server timestamp.

4. The method of any one of claim 1-3, further comprising:
- *receiving (303),* from the server communication device (102), a distributed music playlist comprising one or more music tracks added by one or more members of a music group session;
- *sending (204,304)* information relating to a music track to be added to the distributed music playlist shared by the one or more members of the music group session;
- *receiving (305),* from the server communication device (102), a command for a playback of a music track in the distributed playlist, and
- *playing (207,306)* back at least a part of the music track using the calculated client command timestamp, whereby the playback is clock synchronized for all members of the music group session.

5. The method of claim 4, further comprising:
- *sending (208,307)* a vote on a music track comprised in the distributed music playlist; and wherein
- the *receiving (303)* further comprises receiving a synchronized distributed music playlist comprising information relating to one or more added music tracks from members of the music group session, wherein the synchronized distributed music playlist is sorted based on the number of votes each music track has received.

6. The method of claim 4 or 5, wherein the *sending (204,304)* further comprises sending information relating to the music track from a local storage (407) comprised in the client communications device (104) or from an external storage (108) connected to the client communications device (104).

7. A method in a server communication device (102) for supporting clock synchronization with at least one client communication device (104), wherein the server communication device (102) and the at least one client communication device (104) are communicatively connectable via a communications network (101), and wherein the method comprises:
- *receiving (501),* from the client communication device (104), a first request requesting a first server timestamp, *FirstServerTimestamp;*
- *sending (502),* to the client communication device (104), the first server timestamp, *FirstServerTimestamp,* in response to the first request, wherein the first server timestamp is a current server internal clock value relating to the first request;
- *receiving (503),* from the client communication device (104), a second request requesting a roundtrip time value, *RoundTripTime,* for a network message;
- *calculating (504)* the roundtrip time value, *RoundTripTime,* as the difference between a second server timestamp and the first server timestamp, wherein the second server time stamp value is a current server internal clock value relating to the second request; and
- *sending (505),* to the client communication device (104), the total roundtrip time value, *RoundTripTime,* in response to the second request.

8. The method of claim 7, further comprising:
- *receiving (506)* information relating to a music track from the at least one client communication device (104), wherein the at least one client communication device (104) is a member of a music group session;
- *adding (205,507)* the music track to a distributed music playlist shared by the at least one client communication device (104); and
- sending *(206,508)* a command for a play back of a music track in the distributed music playlist to all client communication devices (104) being members of the music group session.

9. The method of claim 8, further comprising:
- *receiving (509)* a vote on a music track comprised in the distributed music playlist from the at least one client communication devices (104); and
- *sorting (209,510)* the distributed music playlist based on the number of votes each music track has received.

10. The method of claim 8 or 9, wherein the *adding (205,507)* further comprises adding the music track to the distributed music play list in dependence of the number of votes the client communication device (104) have received on one or more previously added music tracks.

11. The method of any one of claim 8-10, wherein the *adding (205,507)* further comprises adding the music track to the distributed music play list only when a music track previously added by the same client communication device (104) have been played back and removed from the distributed music play list.

12. A client communication device (104) for clock synchronization with a server communication device (102), wherein the server communication device (102) and the client communication device (104) are communicatively connectable via a communications network (101), and wherein the client communication device (104) comprises:
- a calculating circuit (403) configured to calculate a client command timestamp, *ClientCommandTimestamp,* for a command communicated by the server communication device (102) as
*ClientCommandTimestamp = ServerCommandTimestamp -* (*FirstClientTimestamp - FirstServerTimestamp*) *-* (*RoundTripTime*/*2*)*,*
wherein the *ServerCommandTimestamp* is a server command timestamp corresponding to the server internal clock value for a command communicated by the server communication device (102),
wherein the *FirstServerTimestamp* is a first server timestamp corresponding to a current server internal clock value relating to a first request,
wherein the *FirstClientTimestamp* is a first client timestamp corresponding to current client internal clock value relating to the first request, and
wherein the *RoundTripTime* is a roundtrip time value corresponding to the difference between a second server timestamp and the first server timestamp, wherein the second server time stamp value is a current server internal clock value relating to a second request; and
- a synchronizing circuit (404) configured to synchronize to the internal clock of the server communication device (102) by means of the calculated client command timestamp, *ClientCommandTimestamp.*

13. The client communication device (104) of claim 12, further comprising a sending circuit (401) and a receiving circuit (402), and wherein the calculating circuit (503) further is configured to:
- by means of the sending circuit (401), send, to the server communication device (102), the first request requesting a first server timestamp, *FirstServerTimestamp;*
- by means of the receiving circuit (402), receive, from the server communication device (102), the first server timestamp, *FirstServerTimestamp,* wherein the first server timestamp, *FirstServerTimestamp,* is the current server internal clock value for the first request;
- by means of the sending circuit (401), send, to the server communication device (102), the second request requesting the roundtrip time value for a network message; and
- by means of the receiving circuit (402), receive, from the server communication device (102), the roundtrip time value, *RoundTripTime.*

14. The client communication device (104) of claim 12, further comprising a sending circuit (401) and a receiving circuit (402), and wherein the calculating circuit (503) further is configured to:
- by means of the receiving circuit (402), receive, from the server communication device (102), the first request requesting a first response from the client communication device (104) and comprising the first server timestamp, *FirstServerTimestamp;*
- by means of the sending circuit (401), send, to the server communication device (102), the first response;
- by means of the receiving circuit (402), receive, from the server communication device (102), the second request comprising the second server timestamp; and
- calculate the roundtrip time value, *RoundTripTime,* as the difference between the second server timestamp and the first server timestamp.

15. The client communication device (104) of any one of claim 12-14, further comprising:
- a receiving circuit (402) configured to receive, from the server communication device (102), a distributed music playlist comprising one or more music tracks added by one or more members of a music group session;
- a sending circuit (401) configured to send information relating to a music track to be added to the distributed music playlist shared by the one or more members of the music group session;
- wherein the receiving circuit (402) further is configured to receive, from the server communication device (102), a command for a playback of a music track in the distributed playlist, and wherein the client communication device (104) further comprises:
- a playback circuit (405) configured to play back at least a part of the music track using the calculated client command timestamp, whereby the playback is clock synchronized for all client communication devices (104) being members of the music group session.

16. The client communication device (104) of claim 15, wherein:
- the sending circuit (401) further is configured to send a vote on a music track comprised in the distributed music playlist; and wherein
- the receiving circuit (402) further is configured to receive a synchronized distributed music playlist comprising information relating to one or more added music tracks from members of the music group session, wherein the synchronized distributed music playlist is sorted based on the number of votes each music track has received.

17. The client communication device (104) of claim 15 or 16, wherein the sending circuit (501) further is configured to send information relating to the music track from a local storage (407) comprised in the client communications device (104) or from an external storage (108) connected to the client communications device (104).

18. A server communication device (102) for supporting clock synchronization with at least one client communication device (104), wherein the server communication device (102) and the at least one client communication device (104) are communicatively connectable via a communications network (101), and wherein the server communication device (102) comprises:
- a receiving circuit (602) configured to receive, from the client communication device (104), a first request requesting a first server timestamp, *FirstServerTimestamp;*
- a sending circuit (602) configured to send, to the client communication device (104), the first server timestamp, *FirstServerTimestamp,* in response to the first request, wherein the first server timestamp is a current server internal clock value relating to the first request; and
- wherein the receiving circuit (601) further is configured to receive, from the client communication device (104), a second request requesting a roundtrip time value, *RoundTripTime,* for a network message; and wherein the server communication device (102) further comprises:
- a calculating circuit (603) configured to calculate the roundtrip time value, *RoundTripTime,* as the difference between a second server timestamp and the first server timestamp, wherein the second server time stamp value is a current server internal clock value relating to the second request; and
- wherein the sending circuit (602) further is configured to send, to the client communication device (104), the total roundtrip time value, *RoundTripTime,* in response to the second request.

19. The server communication device (102) of claim 18, wherein:
- the receiving circuit (601) further is configured to receive information relating to a music track from the at least one client communication device (104), wherein the at least one client communication device (104) is a member of a music group session; wherein the server communication device (102) further comprises:
- an adding circuit (604) configured to add the music track to a distributed music playlist shared by the at least one client communication device (104); and wherein
- sending circuit (602) further is configured to send a command for a play back of a music track in the distributed music playlist to all client communication devices (104) being members of the music group session.

20. The server communication device (102) of claim 19, wherein:
- the receiving circuit (601) further is configured to receive a vote on a music track comprised in the distributed music playlist from the at least one client communication devices (104); and wherein the server communication device (102) further comprises:
- a sorting circuit (605) configured to sort the distributed music playlist based on the number of votes each music track has received.

21. The server communication device (102) of claim 19 or 20, wherein:
- the adding circuit (604) further is configured to add the music track to the distributed music play list in dependence of the number of votes the client communication device (104) have received on one or more previously added music tracks.

22. The server communication device (102) of any one of claim 19-21, wherein:
- the adding circuit (604) further is configured to add the music track to the distributed music play list only when a music track previously added by the same client communication device (104) have been played back and removed from the distributed music play list.
